# EUROPEAN PATENT SPECIFICATION

(11) **EP 2 215 098 B1**
(45) Date of publication and mention of the grant of the patent: **20.08.2014**
(21) Application number: 08857672.3
(22) Date of filing: 01.12.2008
(51) Int. Cl.: C07F 7/18

(54) **FLUOROALKYL SILANES**
FLUORALKYLSILANE
FLUOROALKYL-SILANES

(30) Priority: 04.12.2007 US 5444; 26.11.2008 US 323593
(43) Date of publication of application: 11.08.2010
(73) Proprietor: E. I. du Pont de Nemours and Company, Wilmington, DE 19898 (US)
(72) Inventor: HERZOG, Axel, Hans-joachim, West Chester Pennsylvania 19380 (US); BROWN, Gerald, Oronde, Wilmington Delaware 19809 (US)
(74) Representative: Heinemann, Monica
(86) International application number: PCT/US2008/085109
(87) International publication number: WO 2009/073595

(56) References cited:
- EP-A- 0 953 331
- WO-A-03/014131
- WO-A-2009/008380
- JP-A- 2000 063 797
- US-A1- 2008 113 573

## Description

### BACKGROUND OF THE INVENTION

Fluoroalkyl silanes are a class of compounds useful for various industrial purposes. For example, fluoroalkyl silanes which have hydrolysable groups (called hydrolysable fluoroalkyl silanes), are compounds useful as surface treatment agents which provide durable hydrophobic and oleophobic coatings. In general, hydrolysable fluoroalkyl silanes can be represented with the following formula: (RO-)₃Si-R_{T} wherein R is H or an alkyl; and R_{T} is a monovalent organic compound terminated by a perfluoroalkyl group. When used to coat a surface, the (RO-)₃ moiety reacts (via hydrolysis) with various chemical groups of the surface (e.g., hydroxyl, amine, or other reactive groups) thereby bonding the fluoroalkyl silane to the surface. The R_{T} moiety comprises a divalent organic linking group which links the silicon atom to a terminal group rich in fluorine atoms whose unique electronic properties impart desirable hydrophobic and oleophobic properties in a surface coating.

Efforts have been made to engineer fluoroalkyl silanes by incorporating R_{T} moieties which have different divalent organic linking groups which link to the silicon atom of the fluoroalkyl silane. Examples of such divalent organic linking groups include esters, sulfonamides, amides, ethers, thioethers, arylenes, urethanes, and hydrines as discussed by EP 0157218 A1; JP 2002053805 A; EP 0950662 A1; EP 0640611 A1; US 2006147645 A1; US 2005136264 A1; EP 864622 A2; WO 03/014131 A1, JP 2000063797 A; EP 0953331 A1 as well as Bommelaer, J. et al. J. Fluorine Chem. 1991, 55(1),79-83; Bovenkamp, J. W. et al. Ind. Eng. Chem. Prod. Res. Dev. 1981, 20(1), 130-133; Howarter, J. et al. Polym. Preprints (American Chemical Society, Division of Polymer Chemistry) 2005, 46(2), 21-22). The foregoing references are evidence that modification of the R_{T} moiety is useful in the engineering of fluoroalkyl silanes. The present invention provides for fluoroalkyl silanes having R_{T} moieties which have not been heretofore considered.

### BRIEF SUMMARY OF THE INVENTION

(L)₃-Si-(CH₂)ₙ-(Z¹)ₐ-[C(X¹)]ₓ-(Z²)ₗ-Q¹-R_{f} Formula 1

wherein:
each n is independently an integer from 1 to 12;
a, x, and I are integers chosen such that the moiety of Formula 1 represented by -(Z¹)ₐ-[C(X¹)]ₓ**-**(Z²)ₗ- further represents at least one of the following moieties:
   i) a first moiety wherein a=1, x=1, and l=1; and
   ii) a second moiety wherein a=1, x=0; and l=0;
L is independently chosen from a hydrolysable or non-hydrolysable monovalent group
R_{f} is chosen from a C₂-C₁₂ perfluoroalkyl provided that: i) one fluorine atom of the perfluoroalkyl can be optionally replaced by hydrogen, and/or ii) the perfluoroalkyl can be optionally interrupted by at least one oxygen, methylene, or ethylene;
Q¹ is chosen from the group consisting of a C₂-C₁₂ hydrocarbylene optionally interrupted by at least one divalent organic group;
X¹ is chosen from O or S;
the first moiety further defined wherein Z¹ and Z² are chosen such that:
a) Z¹ is -NH- and Z² is from the group consisting of -NH-, -NH-S(O)₂-, -N[C(O)H]-, -[HC(COOH)(R¹)]CH-S-, and -(R¹)CH-[HC(COOH)]-S-;
b) alternatively, Z² is -NH- and Z¹ is -S-;
c) each R¹ is independently chosen from hydrogen, phenyl, or a monovalent C₁-C₈ alkyl optionally terminated by -C₆H₅, preferably H or CH₃;
the second moiety further defined wherein:
a) Z¹ is-N(-Q³-R_{f}), and
b) Q¹ and Q³ are independently chosen from the group consisting of a C₂-C₁₂ hydrocarbylene interrupted by at least one of -C(O)-O- or-O-C(O)-, and optionally further interrupted by at least one divalent organic group.

Unless otherwise stated herein the definitions used herein for L, n, Z¹, X¹, Z², Q¹, Q³, R¹, and R_{f} are identical to the definitions set forth above for Formula 1.

A preferred fluorosilane of Formula 1 is an isocyanate derived fluorosilane being a urea or thiourea fluorosilane wherein:
Z¹ and Z² are both -NH-;
said urea or thiourea represented by the formula:

(L)₃Si-(CH₂)ₙ-NH-C(X¹)-NH-Q¹-R_{f}

wherein:
X¹ is O to form a urea fluorosilane, or X¹ is S to form a thiourea fluorosilane; and
Q¹ is independently chosen from the group consisting of a C₂-C₁₂ hydrocarbylene optionally interrupted by at least one divalent moiety chosen from the group consisting of -S-, -S(O)-, -S(O)₂-, and -O-C(O)-NH -.

A preferred urea or thiourea fluorosilane is one wherein R_{f} is chosen from a C₂-C₁₂ perfluoroalkyl and Q¹ is independently chosen from the group consisting of a C₂-C₁ hydrocarbylene interrupted by at least one divalent moiety chosen from the group consisting of -S-, -S(O)-, -S(O)₂-, and -O-C(O)-NH-.

A preferred urea or thiourea fluorosilane is one wherein R_{f} is chosen from a C₂-C₁₂ perfluoroalkyl provided that: i) one fluorine atom of the perfluoroalkyl is replaced by hydrogen, and/or ii) the perfluoroalkyl is interrupted by at least one oxygen, methylene, or ethylene.

Another preferred isocyanate derived fluorosilane of Formula 1 is a thiolcarbamate fluorosilane wherein:
Z¹ is -S- and Z² is-NH-; and
X¹ is O;
said carbamate represented by the formulae:

(L)₃Si-(CH₂)ₙ-NH-C(O)-S-Q¹-R_{f}

or

(L)₃Si-(CH₂)ₙ-S-C(O)-NH-Q¹-R_{f}

wherein:
Q¹ is independently chosen from the group consisting of a C₂-C₁₂ hydrocarbylene optionally interrupted by at least one divalent moiety chosen from the group consisting of -S-, -S(O)-, -S(O)₂-, -N(R¹)-C(O)-, -C(O)-N(R¹)-, -(R¹)N-S(O)₂-,
and

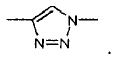

A preferred thiolcarbamate fluorosilane is one wherein R_{f} is chosen from a C₂-C₁₂ perfluoroalkyl and Q¹ is independently chosen from the group consisting of a C₂-C₁₂ hydrocarbylene interrupted by at least one divalent moiety chosen from the group consisting of -S-, -S(O)-, -S(O)₂-, and -O-C(O)-NH-.

A preferred thiolcarbamate fluorosilane is one wherein R_{f} is chosen from a C₂-C₁₂ perfluoroalkyl provided that: i) one fluorine atom of the perfluoroalkyl is replaced by hydrogen, and/or ii) the perfluoroalkyl is interrupted by at least one oxygen, methylene, or ethylene.

Another preferred isocyanate derived fluorosilane of Formula 1 is a N-sulfone urea fluorosilane wherein:
Z¹ is -NH-, and Z² is -NH-S(O)₂-; and
X¹ is O;
said N-sulfone urea represented by the formula:

(L)₃Si-(CH₂)ₙ-NH-C(O)-NH-S(O)₂-Q¹-R_{f}

wherein:
Q¹ is independently chosen from the group consisting of an uninterrupted C₂-C₁₂ hydrocarbylene.

Another preferred isocyanate derived fluorosilane of Formula 1 is a formyl urea fluorosilane wherein:
a=1, x=1, and l=1; and
Z¹ is -NH-, and Z² is -N[C(O)H]-;
said formyl urea represented by the formula:

(L)₃Si-(CH₂)ₙ-NH-C(X¹)-N[C(O)H]-Q¹-R_{f}

wherein:
Q¹ is independently chosen from the group consisting of a C₂-C₁₂ hydrocarbylene interrupted by at least one divalent moiety chosen from the group consisting of -S- and -NH-.

Another preferred fluorosilane of Formula 1 is a thioether succinamic acid fluorosilane wherein:
a=1 , x=1, and l=1;
Z¹ is -NH- and Z² is -[HC(COOH)(R¹)]CH-S- or

   -(R¹)CH-[HC(COOH)]-S-;
X¹ is O; and Q¹ is -(CH₂)₂-
said thioether succinamic acid represented by the formulae:

(L)₃Si-(CH₂)ₙ-NH-C(O)-[HC(COOH)(R¹)]CR¹-(CH₂)ₘ-S-(CH₂)₂-R_{f},

or

(L)₃Si-(CH₂)ₙ-NH-C(O)-(R)CH-[CR¹(COOH)]-(CH₂)ₘ-S-(CH₂)₂-R_{f}

wherein m is 1 or 0, preferably 0, wherein each R¹ is independently chosen from methyl or hydrogen preferably H.

Another preferred fluorosilane of Formula 1 is a tertiary amine fluorosilane wherein:
a=1, x=0; and l=0; and
Z¹ is -N[-Q³-(R_{f})]-;
   said tertiary amine represented by the formula: 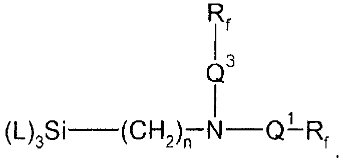
Q¹ and Q³ is independently chosen from the group consisting of a C₂-C₁₂ hydrocarbylene interrupted by at least one -C(O)-O- and optionally further interrupted by at least one divalent moiety chosen from the group consisting of -S-, -S(O)-, -S(O)₂-, -N(R¹)-C(O)-, -C(O)-N(R¹)-, - (R¹)N-S(O)₂-, and 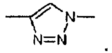
Q¹ and Q³ are preferably the same in preferred tertiary amine fluorosilanes of the present invention.

### DETAILED DESCRIPTION OF THE INVENTION

A preferred fluorosilane of Formula 1 is an isocyanate derived fluorosilane represented by (L)₃-Si-(CH₂)ₙ-Z¹-C(X¹)-Z²-Q¹-R_{f} wherein Z¹ is -NH- and Z² is from the group consisting of -NH- and -NH-S(O)₂-; alternatively, Z² is -NH- and Z¹ is -S-. Preferably, both of Z¹ and Z² are -NH-.

Isocyanate derived fluorosilanes of the invention can be made by reacting an isocyanate or isothiocyanate with any one of an amine, an alcohol or thiol. For example, an isocyanate terminated silane or isothiocyanate, as represented by (L)₃-Si-(CH₂)ₙ-N=C=X¹,can be reacted with a fluoroalkyl terminated by amine, alcohol, thiol, or sulfonamine, as represented by HZ²-Q¹-R_{f} (wherein Z² is -NH- or -NH-S(O)₂-). Conversely, a silane terminated by amine, alcohol, thiol, or sulfonamine, as represented by (L)₃-Si-(CH₂)ₙ-Z¹ H (wherein Z¹ is -NH- or S), can be reacted with a fluoroalkyl terminated by isocyanate or isothiocyanate, as represented by X¹=C=N-Q¹-R_{f}.

A preferred isocyanate derived fluorosilane is a urea fluorosilane wherein X¹ is O; and Z¹ and Z² are both -NH-; said urea fluorosilane represented by (L)₃Si-(CH₂)ₙ-NH-C(O)-NH-Q¹-R_{f}. Urea fluorosilanes of the invention can be made by reacting an isocyanate with an amine. For example, an isocyanate terminated silane, as represented by (L)₃-Si-(CH₂)ₙ-N=C=O, can be reacted with an amine terminated fluoroalkyl, as represented by H₂N-Q¹-R_{f}. Conversely, an amine terminated silane, as represented by (L)₃-Si-(CH₂)ₙ-NH₂, can be reacted with an isocyanate terminated fluoroalkyl, as represented by O=C=N-Q¹-R_{f}.

Another preferred isocyanate derived fluorosilane is a thiourea fluorosilane wherein X¹ is S; and Z¹ and Z² are both -NH-; said thiourea fluorosilane represented by (L)₃Si-(CH₂)ₙ-NH-C(S)-NH-Q¹-R_{f}. Thiourea fluorosilanes of the invention can be made by reacting an isothiocyanate with an amine. = For example, a isothiocyanate terminated silane, as represented by (L)₃-Si-(CH₂)ₙ-N=C=S [Synthesis see e.g., US5616762] can be reacted with an amine terminated fluoroalkyl, as represented by H₂N-Q¹-R_{f}. Conversely, an amine terminated silane, as represented by (L)₃-Si-(CH₂)ₙ-NH₂, can be reacted with a isothiocyanate terminated fluoroalkyl, as represented by S=C=N-Q¹-R_{f}.

The carbamate fluorosilanes of the present invention are made such that Q¹ is chosen from the group consisting of a C₂-C₁₂ hydrocarbylene interrupted by at least one divalent moiety chosen from the group consisting of -NH-C(O)-NH-, -NH-C(S)-NH- -S-, -S(O)-, -S(O)₂-, -(R¹)N-S(O)₂-,

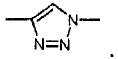

Another preferred isocyanate derived fluorosilane is a thiolcarbamate fluorosilane wherein X¹ is O; Z¹ is -S- and Z² is -NH-; said thiolcarbamate fluorosilane represented by the formulae: (L)₃Si-(CH₂)ₙ-NH-C(O)-S-Q¹-R_{f} or (L)₃Si-(CH₂)ₙ-S-C(O)-NH-Q¹-R_{f}. Thiolcarbamate fluorosilanes of the invention can be made by reacting an isocyanate with a thiol in the presence of a catalyst such as dibutyltin dilaurate, iron tricholide, or tetraethoxytitanium. For example, a thiol terminated silane, as represented by (L)₃-Si-(CH₂)ₙ-SH, can be reacted with an isocyanate terminated fluoroalkyl, as represented by O=C=N-Q¹-R_{f}.

Another preferred isocyanate derived fluorosilane is a N-sulfone urea fluorosilane represented by (L)₃Si-(CH₂)ₙ-NH-C(O)-NH-S(O)₂-Q¹-R_{f} wherein Q¹ is independently chosen from the group consisting of an uninterrupted C₂-C₁₂ hydrocarbylene. N-sulfone urea fluorosilanes of the invention can be made by reacting an isocyanate terminated silane, as represented by (L)₃-Si-(CH₂)ₙ-N=C=O, with a sulfonamine terminated fluoroalkyl, as represented by NH₂-S(O)₂-Q¹-R_{f}.

Another preferred isocyanate derived fluorosilane is a formyl urea fluorosilane represented by (L)₃Si-(CH₂)ₙ-NH-C(X¹)-N[C(O)H]-Q¹-R_{f}, wherein Q¹ is a C₂-C₁₂ hydrocarbylene interrupted by at least one divalent moiety chosen from the group consisting of -S- and -NH-.

Isocyanate derived fluorosilanes of the invention can be made by reacting a silane terminated isocyanate, represented by (L)₃-Si-(CH₂)ₙ-N=C=O, with an N-vinylformamide fluoroalkyl, represented by HN[C(O)H]-Q¹-R_{f}, in the presence of a catalyst such as dibutyltin dilaurate, iron trichloride, or tetraethoxy titanium.

Another preferred fluorosilanes of Formula 1 is a thioether succinamic acid fluorosilane represented by the formulae:

(L)₃Si-(CH₂)ₙ-NH-C(O)-[HC(COOH)(R¹)]CR¹-(CH₂)ₘ-S-(CH₂)₁-R_{f},

or

(L)₃Si-(CH₂)ₙ-NH-C(O)-(R)CH-[CR¹(COOH)]-(CH₂)ₘ-S-(CH₂)₂-R_{f}

wherein m 1 or 0, pref 0; wherein each R¹ is independently chosen from methyl or hydrogen preferably H. Thioether succinamic acid fluorosilanes of the invention can be made by reacting an amine terminated silane, as represented by (L)₃-Si-(CH₂)ₙ-NH₂, with a succinic anhydride terminated fluoroalkyl, as represented by 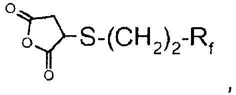 thereby yielding an isomeric mixture of thioether succinamic acid fluorosilanes represented by the formulae above.

Tertiary amine fluorosilane of the invention represented by the formula 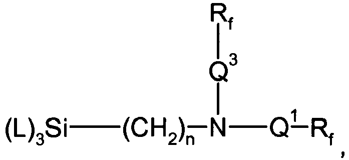 can be made by the Michael reaction of about one molar equivalent of an amino silane represented by (L)₃Si-(CH₂)ₙ-NH₂ with about two molar equivalents of a vinyl terminated fluoroalkyl selected from Q⁶-R_{f} or Q⁷-R_{f} or a mixture thereof wherein Q⁶ and Q⁷ are independently selected from C₄-C₁₀ hydrocarbylene terminated with propenoyloxy group (CH₂=CH₂-C(O)-O-) and said hydrocarbylene optionally interrupted by at least one divalent moiety chosen from the group consisting of -S-, -S(O)-, -S(O)₂-, -N(R¹)-C(O)-, -C(O)-N(R¹)-, -(R¹)N-S(O)₂-, and 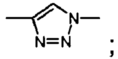 wherein R¹ chosen from hydrogen, phenyl, or a monovalent C₁-C₈ alkyl optionally terminated by - C₆H₅, preferably H or CH₃. One example of Q⁶-R_{f} or Q⁷-R_{f} is CH₂=CH₂-C(O)-O-(CH₂)₂-R_{f} The conditions of Michael reaction are well known in the art and, in accordance with the invention, can involve a solvent such as ethanol and stirring at elevated temperatures (e.g., about 60 °C) for an extended period of time (e.g., about 5 hours).

### EXAMPLES

The term "CAS#" refers to unique numerical identifiers for chemical compounds which are published by Chemical Abstracts Service of Columbus, Ohio, USA.

### Example 1 - synthesis of urea fluorosilane (1-[2-(3,3,4,4,5,5,6,6,7,7,8,8,8-tridecafluoro-octylsulfanyl)-ethyl]-3-(triethoxysilyl-propyl)-urea)

A urea fluorosilane was synthesized by reacting an amine terminated silane (aminopropyl triethoxysilane, APTES, CAS# 919-30-2) with an isocyanate terminated fluoroalkyl, 1,1,1,2,2,3,3,4,4,5,5,6,6-tridecafluoro-8-(2-isocyanato-ethylsulfanyl)-octane, as depicted by the following:

(CH₃CH₂-O-)₃Si-(CH₂)₃-NH₂ + O=C=N-(CH₂)₂-S-(CH₂)₂-C₆F₁₃ → (CH₃CH₂-O-)₃Si-(CH₂)₃-NH-C(O)-NH-(CH₂)₂-S-(CH₂)₂-CeF₁₃.

An equivalent of 1,1,1,2,2,3,3,4,4,5,5,6,6-tridecafluoro-8-(2-isocyanato-ethylsulfanyl)-octane, dissolved in toluene, was added dropwise to a solution of one equivalent of APTES, dissolved in toluene, at 0 °C. The mixture was stirred at ambient temperature for one hour. The solvent was removed under vacuum to provide the desired silane as an amber oil.
¹H NMR (CDCl₃): 0.57 (m, 2H, CH₂Si), 1.12 (t, 9H, CH₃), 1.53 (m, 2H, CH₂CH₂Si), 2.31 (m, 2H, CF₂CH₂), 2.64 (m, 2H, SCH₂), 2.69 (m, 2H, CH₂S), 3.08 (m, 2H, NHCH₂), 3.32 (m, 2H, CH₂NH), 3.76 (m, 6H, OCH₂), 5.26 (m, 1H, NHCH₂), 5.45 (m, 1H, CH₂NH).
¹³C NMR (CDCl₃): 8.1 (s, CH₂Si), 18.5 (s, CH₃), 22.8 (s, CH₂CH₂Si), 23.9 (s, CH₂S), 32.3 (m, CF₂CH₂), 33.4 (s, SCH₂), 40.0 (s, NHCH₂), 42.9 (s, CH₂NH), 58.7 (s, OCH₂), 106 - 122 (m, CF₂ and CF₃), 159.0 (s, CO).

The isocyanate terminated fluoroalkyl in this example was made according to the following procedure. A solution of one equivalent of 2-(3,3,4,4,5,5,6,6,7,7,8,8,8-tridecafluoro-octylsulfanyl)-ethylamine (0.1 mol) and one equivalent of triethyl amine (0.1 mol) in dry toluene (350 mL) is cooled to 0 °C (ice bath). Ethyl chloroformate (0.11 mol) is added dropwise within 20 min. The mixture, while stirring, was allowed to warm to room temperature. A second equivalent of triethyl amine (0.1 mol) is added followed by the dropwise addition of methyl trichlorosilane (0.12 mol) at 30 - 40 °C (addition time about 20-30 min). The mixture was then heated to 100 °C for 1 hour. After the mixture had cooled to ambient temperature the precipitated ammonium salts were filtered off. Under steady N₂ flow, both toluene and generated ethoxy methyl dichlorosilane were distilled off at 200 mm Hg. The residue was dried in vacuum to furnish the tile compound in 95 % yield as a light red-brown liquid.

2-(3,3,4,4,5,5,6,6,7,7,8,8,8-tridecafluoro-octylsulfanyl)-ethylamine was made by the acid catalyzed deacylation of N-[2-(3,3,4,4,5,5,6,6,7,7,8,8,8-tridecafluoro-octylsulfanyl)-ethyl]-acetamide which was made by reacting 3,3,4,4,5,5,6,6,7,7,8,8,8-tridecafluorooctane-1-thiol with *N*-vinylamide.

### Example 2 - synthesis of urea fluorosilane

A urea fluorosilane was synthesized by reacting an isocyanate terminated silane (3-isocyanatopropyl triethoxysilane) with an amine terminated fluoroalkyl, 2-(3,3,4,4,5,5,6,6,7,7,8,8,8-tridecafluorooctylsulfanyl)-ethylamine, as depicted by the following:

(CH₃CH₂-O-)₃Si-(CH₂)₃-N=C=O + H₂N-(CH₂)₂-S-(CH₂)₂-C₆F₁₃ → (CH₃CH₂-O-)₃Si-(CH₂)₃-NH-C(O)-NH-(CH₂)₂-S-(CH₂)₂-C₆Fi₃.

An equivalent of 2-(3,3,4,4,5,5,6,6,7,7,8,8,8-tridecafluoro-octylsulfanyl)-ethylamine, dissolved in toluene, was added dropwise to a solution of one equivalent of 3-isocyanatopropyl triethoxysilane (CAS# 24801-88-5, Gelest Inc, Morrisville, PA 19067) dissolved in toluene, at 0 °C. The mixture was stirred at ambient temperature for one hour. The solvent was removed under vacuum to provide the desired silane as an amber oil.
¹H NMR (CDCl₃): 0.57 (m, 2H, CH₂Si), 1.12 (t, 9H, CH₃), 1.53 (m, 2H, CH₂CH₂Si), 2.31 (m, 2H, CF₂CH₂), 2.64 (m, 2H, SCH₂), 2.69 (m, 2H, CH₂S), 3.08 (m, 2H, NHCH₂), 3.32 (m, 2H, CH₂NH), 3.76 (m, 6H, OCH₂), 5.26 (m, 1 H, NHCH₂), 5.45 (m, 1 H, CH₂NH).
¹³C NMR (CDCl₃): 8.1 (s, CH₂Si), 18.5 (s, CH₂CH₃), 22.8 (s, CH₂CH₂Si), 23.9 (s, CH₂S), 32.3 (m, CF₂CH₂), 33.4 (s, SCH₂), 40.0 (s, NHCH₂), 42.9 (s, CH₂NH), 58.7 (s, OCH₂), 106 - 122 (m, CF₂ and CF₃), 159.0 (s, CO).

### Example 3 - Synthesis of urea fluorosilane (from C4 VDF thioether amine)

A urea fluorosilane was synthesized by reacting an isocyanate terminated silane (3-isocyanatopropyl triethoxysilane) with an amine terminated fluoroalkyl, 2-(3,3,5,5,6,6,7,7,8,8,8-undecafluoro-octylsulfanyl)-ethyl-ammonium chloride, as depicted by the following:

(CH₃CH₂-O-)₃Si-(CH₂)₃-N=C=O + H₂N-(CH₂)₂-S-(CH₂)₂-CF₂-CH₂-C₄F₉ → (CH₃CH₂-O-)₃Si-(CH₂)₃-NH-C(O)-NH-(CH₂)₂-S-(CH₂)₂-CF₂-CH₂-C₄F₉.

Di-*i-*propyl ethyl amine (one equivalent) was added dropwise to a mixture of 2-(3,3,5,5,6,6,7,7,8,8,8-undecafluoro-octylsulfanyl)-ethyl-ammonium chloride (one equivalent) and 3-isocyanatopropyl triethoxysilane (one equivalent) (CAS# 24801-88-5, Gelest Inc, Morrisville, PA 19067) in anhydrous THF ambient temperature. The mixture was stirred at 60 °C for one hour. The solvent was removed under vacuum and the pasty residue was triturated with a mixture of toluene and hexanes (1:2) and filtered. The filtrate was dried under reduced pressure to furnish the desired silane in quantitative yield as an amber oil.
¹H NMR (CDCl₃): 0.56 (m, 2H, CH₂Si), 1.13 (t, 9H, CH₃), 1.52 (m, 2H, CH₂CH₂Si), 2.24 (m, 2H, CF₂CH₂), 2.67 (m, 4H, CH₂S and CF₂CH₂CF₂), 3.07 (m, 2H, SCH₂), 3.29 (m, 2H, NHCH₂), 3.58 (m, 2H, SCH₂CH₂NH), 3.74 (m, 6H, OCH₂), 5.42 (m, 1 H, NHCH₂), 5.74 (m, 1 H, CH₂NH).

2-(3,3,5,5,6,6,7,7,8,8,8-undecafluoro-octylsulfanyl)-ethyl-ammonium chloride was made by was made by the deacylation of N-[2-(3,3,5,5,6,6,7,7,8,8,8-udecafluoro-octylsulfanyl)-ethyl]-formamide as follows. Concentrated hydrogen chloride solution (37.5 w/% in water, five to six-fold molar excess) was added to a solution of one equivalent of Amide Intermediate #3 in ethanol at 0 °C. The reaction mixture was allowed to warm to ambient temperature while being stirred. After the initial foam formation ceased the reaction mixture was stirred at 70 °C for 5 hours. The progress of the reaction was monitored via Gas Chromatography. The 2-(3,3,5,5,6,6,7,7,8,8,8-undecafluoro-octylsulfanyl)-ethyl-ammonium chloride was isolated in quantitative yield by stripping all volatiles under reduced pressure.

*N*-[2-(3,3,5,5,6,6,7,7,8,8,8-udecafluoro-octylsulfanyl)-ethyl]-formamide was made by reacting ,3,5,5,6,6,7,7,8,8,8-undecafluorooctane-1-thiol with N-vinylamide.

3,5,5,6,6,7,7,8,8,8-undecafluoro-octane-1-thiol was made as follows. Under nitrogen, potassium thioacetate (1.1 equivalents) was added to a solution of 1,1,1,2,2,3,3,4,4,6,6-undecafluoro-8-iodo-octane (1 equivalent) in THF. The reaction mixture was stirred at 50 ° for 5 hours. The THF was removed under reduced pressure. The distillation residue was dissolved in methanol (25 mL/0.1 mol) and treated with hydrochloric acid (37 w/% in water, three fold excess). Additional degassed water was added to the mixture. 3,5,5,6,6,7,7,8,8,8-undecafluoro-octane-1-thiol was collected as the fluorous bottom layer and purified via distillation.

### Example 4 - Synthesis of urea fluorosilane 1-[2-(3,3,4,4-tetrafluoro-4-heptafluoropropyloxy-butylsulfanyl)-ethyl]-3-(triethoxysilyl-propyl)-urea (from PPVE thioether amine)

A urea fluorosilane was synthesized by reacting an isocyanate terminated silane (3-isocyanatopropyl triethoxysilane) with an amine terminated fluoroalkyl, 2-(3,3,4,4-tetrafluoro-4-heptafluoropropyloxy-butylsulfanyl)-ethylamine, as depicted by the following:

(CH₃CH₂-O-)₃Si-(CH₂)₃-N=C=O + H₂N-(CH₂)₂-S-(CH₂)₂-C₂F₄OC₃F₉ → (CH₃CH₂-O-)₃Si-(CH₂)₃-NH-C(O)-NH-(CH₂)₂-S-(CH₂)₂- C₂F₄OC₃F₉.

An equivalent of 2-(3,3,4,4-tetrafluoro-4-heptafluoropropyloxy-butylsulfanyl)-ethylamine was added dropwise to a solution of one equivalent of 3-isocyanatopropyl triethoxysilane. The reaction temperature rose to 65 °C due to the occurring exotherm. The reaction mixture was stirred 65 °C for one additional hour to provide the desired silane as an amber oil in quantitative yield.
¹H NMR (CDCl₃): 0.65 (m, 2H, CH₂Si), 1.23 (t, 9H, CH₃), 1.62 (m, 2H, CH₂CH₂Si), 2.31 (m, 2H, CF₂CH₂), 2.71 (m, 2H, SCH₂), 2.75 (m, 2H, CH₂S), 3.15 (m, 2H, NHCH₂), 3.40 (m, 2H, CH₂NH), 3.82 (m, 6H, OCH₂), 5.00 (m, 1H, NHCH₂), 5.17 (m, 1H, CH₂NH).

The amine terminated fluoroalkyl in this example 2-(3,3,4,4-tetrafluoro-4-heptafluoropropyloxy-butylsulfanyl)-ethylamine was made from the acid catalyzed deacylation of *N*-[2-(3,3,4,4-tetrafluoro-4-heptafluoropropyloxy-butylsulfanyl)-ethyl]-formamide which in turn was made by reacting 3,3,4,4-tetrafluoro-4-heptafluoropropyloxy-butane-1-thiol with N-vinylformamide.

### Example 5 - Synthesis of urea fluorosilane 3,3,4,4,5,5,6,6,7,7,8,8,8-tridecafluoro-octane-1-sulfonic acid-N-methyl-{3-[3-(triethoxysilyl-propyl)-ureido]-propyl}-amide (from C6-sulfonamido amine)

A urea fluorosilane was synthesized by reacting an isocyanate terminated silane (3-isocyanatopropyl triethoxysilane) with an amine terminated fluoroalkyl, 3,3,4,4,5,5,6,6,7,7,8,8,8-tridecafluoro-octane-1-sulfonic acid (3-amino-propyl)-N-methyl-amide, as depicted by the following:

(CH₃CH₂-O-)₃Si-(CH₂)₃-N=C=O + H₂N-(CH₂)₃-N(CH₃)-S(O)₂-(CH₂)₂-C₆F₁₃ → (CH₃CH₂-O-)₃Si-(CH₂)₃-NH-C(O)-NH-(CH₂)₃-N(CH₃)-S(O)₂-(CH₂)₂-C₆F₁₃.

In accord to Laduron, F. et al. Org. Proc. Res. Dev. 2005, 9, 104-105, a flask (500 mL) equipped with a Dean-Stark trap and a condenser was charged with a mixture of the *N*-methyl-1,2-propanediamine (73.0 g; 0.83 mol, 88.2 g/mol) and MIBK (230 mL) to in-situ generate N-(1,3-dimethyl-butylidene)-*N*'-methyl-propane-1,3-diamine. The mixture was heated to reflux under nitrogen until no more water (15 mL, 0.83 mol) was produced (6 h). Triethyl amine (91 mL, 0.9 mol) was added to the MIBK solution of the ketimine. The mixture was cooled to 0 °C. A toluene solution of 3,3,4,4,5,5,6,6,7,7,8,8,8-tridecafluorooctanyl-1-sulfonylchloride (529.5 g of a 70 w/% solution, 370.7 g active ingredient; 0.83 mol. Available from DuPont as Capstone™ BL67) was then added drop-wise to the flask. After stirring for 5 h at room temperature and an additional hour at 50 °C the suspension was filtered, and the solvents were removed from the filtrate under reduced pressure. The off-white solid residue was resuspended in water (300 mL) and 2-propanol (100 mL), and the mixture was heated to 65 °C until the hydrolysis was completed (GC). Solvents were distilled off under reduced pressure providing the crude free primary amine. Recrystallization from 2:1 mixtures of ether and toluene furnished 3,3,4,4,5,5,6,6,7,7,8,8,8-tridecafluoro-octane-1-sulfonic acid (3-amino-propyl)-methyl-amide in 49% yield (202 g, 0.41 mol) with a melting point of 135 °C [¹H-NMR (CDCl₃): 1.53 (br, 2H, NH₂), 1.76 (m, 2H, C*H*₂CH₂NH₂), 2.63 (m, 2H, CF₂CH₂), 2.79 (m, 2H, NCH₃C*H*₂), 2.90 (s, 3H, NCH₃), 3.17 (m, 2H, CH₂SO₂N), 3.33 (m, 2H, NCH₂)].

One equivalent of 3,3,4,4,5,5,6,6,7,7,8,8,8-tridecafluoro-octane-1-sulfonic acid (3-amino-propyl)-N-methyl-amide, dissolved in tetrahydrofuran (THF) was added dropwise to a solution of one equivalent of 3-isocyanatopropyl triethoxysilane in THF at 0 °C. The reaction mixture was allowed to warm to ambient temperature and was then stirred at 50 °C for one additional hour. The solvent was removed in vacuo to provide the desired silane as an off-white solid in quantitative yield.
¹H NMR (CDCl₃): 0.63 (m, 2H, CH₂Si), 1.21 (t, 9H, CH₃), 1.59 (m, 2H, CH₂CH₂Si), 1.78 (m, 2H, CH₂CH₂NCH₃), 2.59 (m, 2H, CF₂CH₂), 2.88 (s, 3H, NCH₃), 3.16 (m, 4H, CH₂NH and CH₂SO₂), 3.24 (m, 4H, NHCH₂ and CH₃NCH₂), 3.82 (m, 6H, OCH₂).

### Example 6 (non-inventive) - carbamate fluorosilane from a sulfonamide alcohol (FORAFAC 1051 alcohol)

A carbamate fluorosilane was synthesized by reacting an isocyanate terminated silane (3-isocyanatopropyl triethoxysilane) with a sulfonamido alcohol, 3,3,4,4,5,5,6,6,7,7,8,8,8-tridecafluoro-octane-1-sulfonic acid (3-hydroxy-ethyl)-methyl-amide (commercially available from DuPont as FORAFAC® 1051 alcohol) in the presence of a catalyst (dibutyltin dilaurate) according to the following reaction scheme:

(CH₃CH₂-O-)₃Si-(CH₂)₃-N=C=O + HO-(CH₂)₂-N(CH₃)-S(O)₂-(CH₂)₂-C₆F₁₃ → (CH₃CH₂-O-)₃Si-(CH₂)₃-NH-C(O)-O-(CH₂)₂-(CH₃)N-S(O)₂-(CH₂)₂-C₆F₁₃

An equivalent of each, 3-isocyanatopropyl triethoxysilane and 3,3,4,4,5,5,6,6,7,7,8,8,8-tridecafluoro-octane-1-sulfonic acid (3-hydroxy-ethyl)-methyl-amide, as well as 0.02 equivalents of dibutyltin dilaurate were allowed to react in THF at 50 °C for 5 h. The solvent was removed under vacuum to provide the desired silane as an amber oil.
¹H NMR (CDCl₃): 0.54 (m, 2H, CH₂Si), 1.14 (t, 9H, CH₃), 1.55 (m, 2H, CH₂CH₂Si), 2.55 (m, 2H, CF₂CH₂), 2.91 (s, 3H, NCH₃), 3.10 (m, 4H, CH₂NH and CH₂SO₂), 3.41 (m, 2H, CH₃NCH₂), 3.73 (m, 6H, OCH₂), 4.15 (m, 2H, CH₂OCO), 5.03 (s, br, 1 H, NH).
¹³C NMR (CDCl₃): 7.8 (s, CH₂Si), 18.3 (s, CH₂CH₃), 23.3 (s, CH₂CH₂Si), 26.4 (m, CF₂CH₂), 35.1 (s, NCH₃), 42.5 (s, CH₃NCH₂), 43.6 (s, NHCH₂), 49.4 (s, CH₂SO₂), 58.6 (s, OCH₂), 61.8 (s, CH₂OCO), 106 - 122 (m, CF₂ and CF₃), 156.0 (s, CO).

### Example 7 (non-inventive) - carbamate fluorosilane from a sulfonamido alcohol, [3-(triethoxysilyl)-propyl]-carbamic acid 2-(3,3,4,4,5,5,6,6,7,7,8,8,8-tridecafluoro-octane-1-sulfonylamido)-ethyl ester

A carbamate fluorosilane was synthesized by reacting an isocyanate terminated silane (3-isocyanatopropyl triethoxysilane) with a sulfonamido alcohol, 3,3,4,4,5,5,6,6,7,7,8,8,8-tridecafluoro-octane-1-sulfonic acid (2-hydroxy-ethyl)-amide, in the presence of a catalyst (dibutyltin dilaurate) according to the follow reaction scheme:

(CH₃CH₂-O-)₃Si-(CH₂)₃-N=C=O + HO-(CH₂)₂-HN-S(O)₂-(CH₂)₂-C₆F₁₃ → (CH₃CH₂-O-)₃Si-(CH₂)₃-NH-C(O)-O-(CH₂)₂-HN-S(O)₂-(CH₂)₂-C₆F₁₃

An equivalent of each, 3-isocyanatopropyl triethoxysilane and 3,3,4,4,5,5,6,6,7,7,8,8,8-tridecafluoro-octane-1-sulfonic acid (2-hydroxy-ethyl)-amide (in accordance with British Patent GB1298291A), as well as 0.02 equivalents of dibutyltin dilaurate were allowed to react in THF at 50 °C for 5 h. The solvent was removed under vacuum to provide the desired silane as an amber oil.
¹H NMR (CDCl₃): 0.60 (m, 2H, CH₂Si), 1.18 (t, 9H, CH₃), 1.59 (m, 2H, CH₂CH₂Si), 2.60 (m, 2H, CF₂CH₂), 3.12 (m, 2H, CH₂NH), 3.26 (m, 2H, CH₂SO₂), 3.36 (m, 2H, HNCH₂), 3.77 (m, 6H, OCH₂), 4.15 (m, 2H, CH₂OCO), 5.20 (s, br, 1 H, CONH), 5.58 (s, br, 1 H, SO₂NH).
¹³C NMR (CDCl₃): 6.6 (s, CH₂Si), 17.4 (s, CH₂CH₃), 22.3 (s, CH₂CH₂Si), 24.9 (m, CF₂CH₂), 42.5 (s, SO₂NCH₂), 43.3 (s, NHCH₂), 45.4 (s, CH₂SO₂), 57.5 (s, OCH₂), 62.7 (s, CH₂OCO), 106 - 122 (m, CF₂ and CF₃), 155.5 (s, CO).

### Example 8 (non-inventive) - carbamate fluorosilane from an alcohol terminated triazole, [2-(triethoxysilyl-propyl]-carbamic acid 1-(3,3,4,4,5,5,6,6,7,7,8,8,8-tridecafluoro-octyl)-1H-[1,2,3]-triazol-4-ylmethyl ester

A carbamate fluorosilane was synthesized by reacting an isocyanate terminated silane (3-isocyanatopropyl triethoxysilane) with a alcohol terminated triazole, [1-(3,3,4,4,5,5,6,6,7,7,8,8,8-tridecafluoro-octyl)-1H-[1,2,3]triazol-4-yl]-methanol, in the presence of a catalyst (dibutyltin dilaurate) according to the follow reaction scheme:

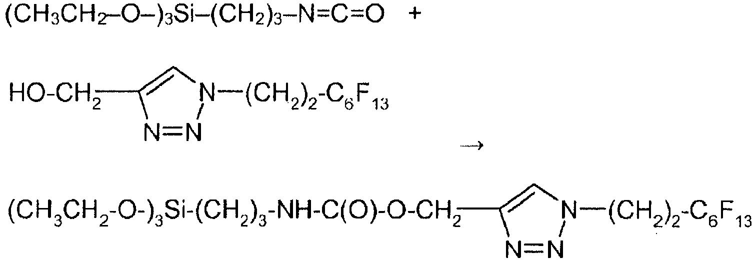

An equivalent of each, 3-isocyanatopropyl triethoxysilane and [1-(3,3,4,4,5,5,6,6,7,7,8,8,8-tridecafluoro-octyl)-1 H-[1,2,3]triazol-4-yl]-methanol (E. J. Acosta et al., US Patent Application US2007066762A1, 2007) as well as 0.02 equivalents of dibutyltin dilaurate were allowed to react in THF at 50 °C for 5 h. The solvent was removed under vacuum to provide the desired silane as an amber oil in quantitative yield.
¹H NMR (CDCl₃): 0.57 (m, 2H, CH₂Si), 1.17 (t, 9H, CH₃), 1.58 (m, 2H, CH₂CH₂Si), 2.78 (m, 2H, CF₂CH₂), 3.12 (m, 2H, CH₂NH), 4.63 (m, 2H, CH₂CH₂N), 5.05 (s, br, 1 H, CONH), 5.15 (s, 2H, CH₂OCO), 7.66 (NCH).
¹³C NMR (CDCl₃): 7.9 (s, CH₂Si), 18.4 (s, CH₂CH₃), 23.5 (s, CH₂CH₂Si), 32.0 (m, CF₂CH₂), 42.4 (s, CH₂N), 43.7 (s, NHCH₂), 57.5 (s, CH₂OCO), 58.7 (s, OCH₂), 108 - 118 (m, CF₂ and CF₃), 124.5 (s, CHN), 144.4 (s, CN), 156.5 (s, CO).

### Example 9 (non-inventive) - carbamate fluorosilane from ETFE-alcohol (α-fluoro-ω-2-hydroxyethyl terminated ethylene-tetrafluoroethylene co-polymer) {3-(4,4,4-triethoxysilyl-propyl)-carbamic acid- 3,3,4,4,7,7,8,8,11,11,12,12,12-tridecafluoro-dodecyl ester}

(CH₃CH₂-O-)₃Si-(CH₂)₃-N=C=O + HO-[(CH₂)₂-(CF₂)₂]ₙ-F → (CH₃CH₂-O-)₃Si-(CH₂)₃-NH-C(O)-O-[(CH₂)₂-(CF₂)₂]ₙ-F (n∼3)

A solution of 3 3,3,4,4,7,7,8,8,11,11,12,12,12-tridecafluoro-dodecan-1-ol (average molecular weight of 420.0 g/mol, 25.0 g, 61.0 mmol), 3-isocyanato-propyl-triethoxysilane (15.1 g, 61.0 mmol) and iron trichloride (4 mg, 2.4 µmol) in anhydrous MIBK (methyl isobutyl ketone) was heated at reflux temperature for 3 h. The solvent was removed in vacuo to furnish the title silane in quantitative yield as a light yellow oil.
¹H NMR (CDCl₃): 0.64 (m, 2H, CH₂Si), 1.22 (t, 9H, CH₃), 1.63 (m, 2H, CH₂CH₂Si), 2.33 (m, 10H, CF₂CH₂), 3.18 (m, 2H, CH₂NH), 3.82 (q, 6H, OCH₂), 4.34 (m, 2H, CH₂OCO), 5.08 (s, br, 1 H, NH).
HO-[(CH₂)₂-(CF₂)₂]ₙ-F was made according to procedures set forth in U.S. Patent Application 12/152,312 filed on May 14, 2008.

### Example 10 - carbamate fluorosilane from C4-VDF-alcohol {3-(4,4,4-triethoxysilyl-propyl)-carbamic acid-3,3,5,5,6,6,7,7,8,8,8-undecafluorooctyl ester}

(CH₃CH₂-O-)₃Si-(CH₂)₃-N=C=O + HO-(CH₂)₂-CF₂-CH₂-C₄F₉ -(CH₃CH₂-O-)₃Si-(CH₂)₃-NH-C(O)-O-(CH₂)₂-CF₂-CH₂-C₄F₉

A neat mixture of 3,3,5,5,6,6,7,7,8,8,8-undecafluoro-octan-1-ol (20.0 g, 61.0 mmol) and 3-isocyanato-propyl-triethoxysilane (15.1 g, 61.0 mmol,) was heated to 60 deg C. Iron trichloride (4 mg, 2.4 µmol), dissolved in MIBK (methyl isobutyl ketone, 1 mL) was added. The reaction temperature immediately increased 110 °C. After the exotherm ceased, the reaction mixture was heated to 85 °C for 3 h. A negative isocyanate test indicated completion of the reaction. The mixture was dried in vacuo to quantitatively yield the title compound as an amber oil.
¹H NMR (CDCl₃): 0.59 (m, 2H, CH₂Si), 1.18 (t, 9H, CH₃), 1.60 (m, 2H, C*H*₂CH₂Si), 2.34 (m, 2H, CF₂CH₂), 2.34 (m, 2H, CF₂CH₂CF₂), 3.15 (m, 2H, CH₂N*H*), 3.79 (q, 6H, OCH₂), 4.26 (m, 2H, CH₂OCO), 5.00 (s, br, 1 H, NH).
HO-(CH₂)₂-CF₂-CH₂-C₄F₉ was synthesized according to US3916009, CIBA-GEIGY AG, 1975.

### Example 11 (non-inventive) - thiolcarbamate fluorosilane [(3-(triethoxysilyl-propyl)-thiocarbamic acid S-(3,3,4,4,5,5,6,6,7,7,8,8,8-tridecafluoro-octyl) ester]

A thiolcarbamate fluorosilane was synthesized by reacting an isocyanate (3-isocyanatopropyl triethoxysilane) with a thiol (1 H,1H,2H,2H-perfluorooctyl-1-thiol) in the presence of a catalyst (dibutyltin dilaurate) according to the follow reaction scheme:

(CH₃CH₂-O-)₃Si-(CH₂)₃-N=C=O + HS-(CH₂)₂-C₆F₁₃ → (CH₃CH₂-O-)₃Si-(CH₂)₃-NH-C(O)-S-(CH₂)₂-C₆F₁₃.

An equivalent of each, isocyanatopropyl triethoxysilane, and 1H,1H,2H,2H-perfluorooctyl-1-thiol (CAS# 34451-26-8), as well as 0.02 equivalents of dibutyltin dilaurate were heated to reflux in MIBK (methyl isobutyl ketone) for 3 h. The solvent was distilled under vacuum to provide the desired silane as an amber oil.
¹H NMR (CDCl₃): 0.62 (m, 2H, CH₂Si), 1.22 (t, 9H, CH₃), 1.65 (m, 2H, C*H*₂CH₂Si), 2.44 (m, 2H, CF₂CH₂), 3.08 (m, 2H, CH₂S), 3.29 (m, 2H, CH₂N), 3.81 (q, 6H, OCH₂), 5.91 (s, br, 1H, NH).

### Example 12 (non-inventive) - thiolcarbamate fluorosilane from C4 VDF thiol [3-(triethoxysilyl-propyl)-thiocarbamic acid S-(3,3,5,5,6,6,7,7,8,8,8-undecafluoro-octyl) ester]

A thiolcarbamate fluorosilane was synthesized by reacting an isocyanate (3-isocyanatopropyl triethoxysilane) with a thiol (3,3,5,5,6,6,7,7,8,8,8-undecafluoro-octane-1-thiol) in the presence of a catalyst (dibutyltin dilaurate) according to the follow reaction scheme:

(CH₃CH₂-O-)₃Si-(CH₂)₃-N=C=O + HS-(CH₂)₂-CF₂CH₂C₄F₉ → (CH₃CH₂-O-)₃Si-(CH₂)₃-NH-C(O)-S-(CH₂)₂-CF₂CH₂C₄F₉.

An equivalent of each, isocyanatopropyl triethoxysilane, and 3,3,5,5,6,6,7,7,8,8,8-undecafluoro-octane-1-thiol (CH3213), as well as 0.02 equivalents of dibutyltin dilaurate were heated at 70 °C for 12h to furnish the desired silane as an amber oil in quantitative yield.
¹H NMR (CDCl₃): 0.63 (m, 2H, CH₂Si), 1.24 (t, 9H, CH₃), 1.67 (m, 2H, C*H*₂CH₂Si), 2.34 (m, 2H, CF₂CH₂), 2.74 (m, 2H, CF₂CH₂CF₂), 3.06 (m, 2H, CH₂S), 3.32 (m, 2H, NCH2), 3.84 (q, 6H, OCH₂), 5.93 (s, br, 1 H, NH).

### Example 13 - N-sulfone urea fluorosilane [3,3,4,4,5,5,6,6,7,7,8,8,8-tridecafluoro-octylsulfonyl ureido-N-(3-triethoxysilyl-propane]

A N-sulfone urea fluorosilane was synthesized by reacting an isocyanate (3-isocyanatopropyl triethoxysilane) with a sulfonamide (3,3,4,4,5,5,6,6,7,7,8,8,8-tridecafluoro-octane-1-sulfonic acid amide) in the presence of a catalyst (dibutyltin dilaurate) according to the follow reaction scheme:

(CH₃CH₂-O-)₃Si-(CH₂)₃-N=C=O + NH₂-S(O)₂-(CH₂)₂-C₆F₁₃ → (CH₃CH₂-O-)₃Si-(CH₂)₃-NH-C(O)-NH-S(O)₂-(CH₂)₂-C₆F₁₃

A THF solution of one equivalent of 3-isocyanatopropyl triethoxysilane and one equivalent of 3,3,4,4,5,5,6,6,7,7,8,8,8-tridecafluoro-octane-1-sulfonic acid amide (E2001100-00087, prepared according to P. Bouvet et al., DE2002460A1, 1970) and 0.02 equivalents of dibutyltin dilaurate was stirred at 65 °C for 8 h (the reaction also proceeds without the use of the catalyst under the same reaction conditions). The solvent was removed under vacuum to provide the desired silane as an off-white solid (Mp 78 °C).
¹H NMR (MeOH-d₄): 0.62 (m, 2H, CH₂Si), 1.18 (t, 9H, CH₃), 1.57 (m, 2H, C*H*₂CH₂Si), 2.72 (m, 2H, CF₂CH₂), 3.07 (m, 2H, CH₂N), 3.34 (m, 2H, CH₂S), 3.61 (q, 6H, OCH₂), Urea-NH not detected.

### Example 14 - synthesis of formyl urea fluorosilane {1-[2-(3,3,4,4,5,5,6,6,7,7,8,8,8-tridecafluoro-octylsulfanyl)-ethyl]-3-(triethoxysilyl-propyl)-12(N)-formyl-urea}

A formyl urea fluorosilane was synthesized by reacting an isocyanate terminated silane (3-isocyanatopropyl triethoxysilane) with an N-vinylformamide fluoroalkyl {*N*-[2-(3,3,4,4,5,5,6,6,7,7,8,8,8-tridecafluoro-octylsulfanyl)-ethyl]-formamide, in the presence of a catalyst (dibutyltin dilaurate) according to the following reaction scheme:

(CH₃CH₂-O-)₃Si-(CH₂)₃-N=C=O + HN[C(O)H]-(CH₂)₂-S-(CH₂)₂-C₆F₁₃ → (CH₃CH₂-O-)₃Si-(CH₂)₃-NH-C(O)-N[C(O)H]-(CH₂)₂-S-(CH₂)₂-C₆F₁₃

A THF (tetrahydrofuran) solution of one equivalent of 3-isocyanatopropyl triethoxysilane and one equivalent of *N*-[2-(3,3,4,4,5,5,6,6,7,7,8,8,8-tridecafluoro-octylsulfanyl)-ethyl]-formamide and 0.02 equivalents of dibutyltin dilaurate was stirred at 65 °C for 8 h. The solvent was removed under vacuum to provide the desired silane as an amber oil.
¹H NMR (CDCl₃): 0.61 (m, 2H, CH₂Si), 1.15 (t, 9H, CH₃), 1.66 (m, 2H, C*H*₂CH₂Si), 2.31 (m, 2H, CF₂CH₂), 2.68 (m, 4H, CH2 SCH₂), 3.22 (m, 2H, CH₂NCOH), 3.42 (m, 2H, NHC*H*₂), 6.43 (s, br, 1 H, NH), 8.11 (s, 1 H, COH).

*N*-[2-(3,3,4,4,5,5,6,6,7,7,8,8,8-tridecafluoro-octylsulfanyl)-ethyl]-formamide which was made by reacting 3,3,4,4,5,5,6,6,7,7,8,8,8-tridecafluoro-octane-1-thiol with N-vinylformamide. All volatiles were removed under reduced pressure to furnish *N*-[2-(3,3,4,4,5,5,6,6,7,7,8,8,8-tridecafluoro-octylsulfanyl)-ethyl]-formamide as an off-white solid.

3,3,4,4,5,5,6,6,7,7,8,8,8-tridecafluoro-octane-1-thiol which was made as follows. Under nitrogen thiourea (1.1 equivalents) and 1-iodo-2-perfluorohexylethane (1 equivalent) were added to a degassed mixture of dimethoxyethane (DME, 9 parts) and water (1 part). The reaction mixture was held at reflux temperature for 8 hours. Most of the DME was distilled off and the distillation residue was allowed to cool to ambient temperature. Under stirring a solution of sodium methoxide in methanol (1 molar, 1.1 equivalents) was added to the suspension. Degassed water was added to the mixture. 3,3,4,4,5,5,6,6,7,7,8,8,8-tridecafluoro-octane-1-thiol was collected quantitatively as the fluorous bottom layer.

### Example 15 - thioether succinamic acid fluorosilane

A thioether succinamic acid fluorosilane {3-(3,3,4,4,5,5,6,6,7,7,8,8,8-tridecafluoro-octylsulfanyl)-*N*-(3-triethoxysilyl-propyl)-succinamic acid (A) & 2-(3,3,4,4,5,5,6,6,7,7,8,8,8-tridecafluoro-octylsulfanyl)-*N*-(3-triethoxysilyl-propyl)-succinamic acid (B)} was made by reacting an amine terminated silane (aminopropyl triethoxysilane) with a succinic anhydride terminated fluoroalkyl {3-(3,3,4,4,5,5,6,6,7,7,8,8,8-tridecafluoro-octylsulfanyl)-dihydrofuran-2,5-dione} according to the following reaction scheme:

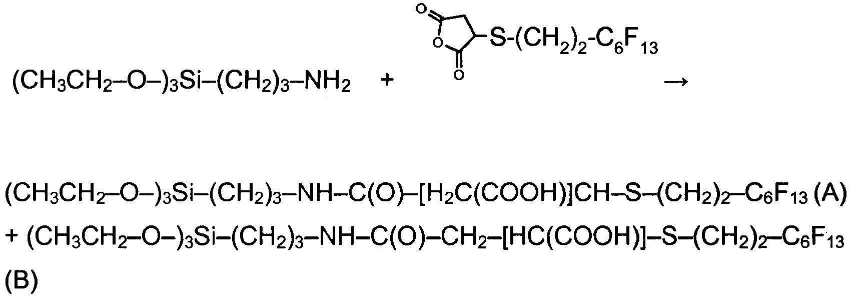

To a suspension of 3-(3,3,4,4,5,5,6,6,7,7,8,8,8-tridecafluoro-octylsulfanyl)-dihydro-furan-2,5-dione (prepared according to US4171282 , freshly prepared in toluene, was added one equivalent of APTES (Aminopropyl triethoxysilane, CAS# 919-30-2) dissolved in toluene at 0 °C. The reaction mixture was stirred at ambient temperature for 2 hours. After removal of all volatiles the desired silane was obtained as a dark-amber oil as a 2:1 mixture of the isomers A and B.
¹H NMR (CDCl₃): 0.64 (m, br, 2H, CH₂Si), 1.24 (t, 9H, CH₃), 1.63 (m, br, 2H, C*H*₂CH₂Si), 2.47 (m, br, 3H, CF₂CH₂ and CH₂COO), 2.85 and 2.92 (2 x m, 2H, 2.68, CH₂S), 3.13 (m, 0.5H, CH₂COO), 3.19 (m, br, 2H, NHC*H*₂), 3.30 (m, br, 1 H, CH₂COO), 3.52 (m, 1 H, SCHCON), 3.64 (m, 1 H, C*H*₂CONH), 3.82 (q, 6H, OCH₂), 6.43 (s, br, 1H, NH), 10.65 (s, 1H, COOH).
¹³C NMR (CDCl₃): 7.8 (s, CH₂Si), 18.3 (s, CH₂*C*H₃), 23.4 (s, C*H*₂CH₂Si), 31.9 (m, CF₂CH₂), 35.7 (s, C*H*₂CONH), 39.4 and 39.8 (s, CH₂S), 41.4 and 42.5 (s, CH₂N*H*), 45.8 (s, SCH), 46.4 (s, SCH₂), 58.7 (s, OCH₂), 108 -118 (m, CF₂ and CF₃), 171.0 and 171.8 (s, CONH), 176.1 and 176.8 (s, COOH).

### Example 16 - tertiary amine fluorosilane from C₆ acrylate

(CH₃CH₂-O-)₃Si-(CH₂)₃-NH₂ + 2 CH₂=CH₂C(O)-O-(CH₂)₂C₆F₁₃ → (CH₃CH₂-O-)₃Si-(CH₂)₃-N[-(CH₂)₂-C(O)-O-(CH₂)₂-C₆F₁₃]₂

A solution of one equivalent of APTES (Aminopropyl triethoxysilane, CAS# 919-30-2) and two equivalents acrylic acid 3,3,4,4,5,5,6,6,7,7,8,8,8-tridecafluoro-octyl ester (CAS# 17527-29-6) in absolute ethanol were allowed to stir at 60 °C for 5h. The solvent was distilled of under reduced pressure to provide the desired twin-tail silane (tertiary amine fluorosilane) quantitatively as an amber oil.
1 H NMR (THF-d8): 0.68 (m, 2H, CH₂Si), 1.63 (m, 2H, C*H*₂CH₂Si), 2.56 (m, br, 6H, CH₂COO and NCH₂), 2.70 (m, 4H, CF₂CH₂), 2.86 (t, 4H, OOCCH₂C*H*₂N), 3.63 (s, 9H, OCH₃), 4.48 (m, 4H, CH₂OOC).
13C NMR (THF-d8): 7.8 (s, CH₂Si), 21.9 (s, C*H*₂CH₂Si), 31.8 (m, CF₂CH₂), 33.9 (s, CH₂COO), 49.7 (s, OCH₃), 57.3 (OOCCH₂C*H*₂N), 58.0 (s, NCH₂), 61.5 (s, CH₂OOC), 109 - 121 (m, CF₂ and CF₃), 172.8 (s, COO).

### Example 17 - tertiary amine fluorosilane from acrylate

(CH₃-O-)₃Si-(CH₂)₃-NH₂ + 2 CH₂=CH₂-C(O)-O-(CH₂)₂-C₆F₁₃ → (CH₃-O-)₃Si-(CH₂)₃-N[-(CH₂)₂-C(O)-O-(CH₂)₂-N(CH₃)-S(O)₂-(CH₂)₂-C₆F₁₃]₂

A mixture one equivalent of 3-aminopropyl trimethoxysilane (commercially available as DYNASYLAN AMMO from Evonik Degussa GmbH of Germany) and two equivalents of acrylic acid-2-[*N-*methyl[(3,3,4,4,5,5,6,6,7,7,8,8,8-tridecafluorooctyl)-1-sulfonylamino]-ethyl ester (prepared according to US Patent 5439998) was allowed to stir at 70 °C for 5h to provide the desired twin-tail silane quantitatively as a amber oil.
1 H NMR (THF-d8): 0.67 (m, 2H, CH₂Si), 1.63 (m, 2H, C*H*₂CH₂Si), 2.54 (2xm, 6H, CH₂COO and NCH₂), 2.79 (m, 4H, CF₂CH₂), 2.86 (t, 4H, OOCCH₂C*H*₂N), 3.08 (s, 6H, NCH3), 3.41 (m, 4H, CH₂SO₂), 3.60 (m, 4H, CH₃ NCH₂), 3.63 (s, 9H, OCH₃), 4.33 (m, 4H, CH₂OCO).
13C NMR (THF-d8): 7.7 (s, CH₂Si), 21.6 (s, C*H*₂CH₂Si), 27.0 (m, CF₂CH₂), 33.7 (s, NCH3), 36.7 (s, CH₂COO), 42.4 (s, OCH₃), 49.7 (s, CH₃ NCH₂), 50.4 (s, OOCCH₂C*H*₂N), 50.8 (s, CH₂SO₂), 57.7 (s, NC*H*₂C₂H₄), 62.8 (s, CH₂OOC), 109 - 121 (m, CF₂ and CF₃), 172.8 (s, COO).

### Example 18 - tertiary amine fluorosilane from C₄ VDF acrylate

A bis-fluoroalkyl (twin-tail) silane with ester and tertiary amine tether moieties was synthesized according to:

(CH₃CH₂-O-)₃Si-(CH₂)₃-NH₂ + 2 CH₂=CH₂-C(O)-O-(CH₂)₂-CF₂-CH₂-C₄F₉ → (CH₃CH₂-O-)₃Si-(CH₂)₃-N[-(CH₂)₂-C(O)-O-(CH₂)₂-CF₂-CH₂-C₄F₉]₂

A solution of one equivalent of APTES (Aminopropyl triethoxysilane, CAS# 919-30-2) and two equivalents acrylic acid 3,3,5,5,6,6,7,7,8,8,8-undecafluoro-octyl ester (synthesized according to US3916009, CIBA-GEIGY AG, 1975) in absolute ethanol were allowed to stir at 60 °C for 5h. The solvent was distilled of under reduced pressure to provide the desired twin-tail silane (tertiary amine fluorosilane) quantitatively as a colorless oil.
1H NMR (MeOH-d4): 0.60 (m, 2H, CH₂Si), 1.18 (t, 9H, CH₃), 1.56 (m, 2H, C*H*₂CH₂Si), 2.47 (m, br, 10H, CF₂CH₂CH₂ and OOCCH2 and NC*H*₂C₂H₄), 2.77 (m, br, 4H, CH₂N), 3.04 (m, 4H, CF₂CH₂CF₂), 3.60 (s, 9H, OCH₃), 4.31 (m, 4H, CH₂OOC).
13C NMR (MeOH-d4): 7.4 (s, CH₂Si), 14.6 (s, C*H*₂CH₂Si), 18.7 (s, CH₃), 21.4 (m, CF₂CH₂CH₂), 33.4 (m, CH₂COO), 37.7 (m, CH₂CF₂CH₂), 50.3 (s, NCH₂), 57.5 (s, N*C*H₂ CH₂COO), 58.9 (m, CF₂CH₂CF₂), 59.4 (s, OCH₂), 61.5 (s, CH₂OOC), 115.5, 117.5, 119.9, 124.1 (4xm, C₂F₉), 173.7 (s, COO).

### Example 19 - tertiary amine fluorosilane from C₆ VDF acrylate

A bis-fluoroalkyl (twin-tail) silane with ester and tertiary amine tether moieties was synthesized according to:

(CH₃CH₂-O-)₃Si-(CH₂)₃-NH₂ + 2 CH₂=CH₂-C(O)-O-(CH₂)₂-CF₂-CH₂-C₆F₁₃ → (CH₃CH₂-O-)₃Si-(CH₂)₃-N[-(CH₂)₂-C(O)-O-(CH₂)₂- CF₂-CH₂-C₆F₁₃]₂

A solution of one equivalent of APTES (Aminopropyl triethoxysilane, CAS# 919-30-2) and two equivalents acrylic acid 3,3,5,5,6,6,7,7,8,8,9,9,10,10,10-pentdecafluoro-decyl ester (synthesized according to US3916009, CIBA-GEIGY AG, 1975) in absolute ethanol were allowed to stir at 60 °C for 5h. The solvent was distilled of under reduced pressure to provide the desired twin-tail silane (tertiary amine fluorosilane) quantitatively as a colorless oil.
1H NMR (MeOH-d4): 0.60 (m, 2H, CH₂Si), 1.18 (t, 9H, CH₃), 1.56 (m, 2H, C*H*₂CH₂Si), 2.47 (m, br, 10H, CF₂*C*H₂CH₂ and OOCCH2 and NC*H*₂C₂H₄), 2.77 (m, br, 4H, CH₂N), 3.04 (m, 4H, CF₂CH₂CF₂), 3.60 (s, 9H, OCH₂), 4.31 (m, 4H, CH₂OOC).
13C NMR (MeOH-d4): 7.4 (s, CH₂Si), 14.6 (s, C*H*₂CH₂Si), 18.7 (s, CH₃), 21.4 (m, CF₂CH₂CH₂), 33.4 (m, CH₂COO), 37.7 (m, CH₂CF₂CH₂), 50.3 (s, CH₂N), 57.6 (OOCCH₂C*H*₂N), 58.9 (m, CF₂CH₂CF₂), 59.4 (s, OCH₂), 61.5 (s, CH₂OOC), 109 - 124.1 (6xm, C₂F₉), 173.7 (s, COO).

### Example 20 - tertiary amine fluorosilane (from C4,2 VDF acrylate; Michael addition)

A bis-fluoroalkyl (twin-tail) silane with ester and tertiary amine tether moieties was synthesized according to:

(CH₃CH₂-O-)₃Si-(CH₂)₃-NH₂ + 2 CH₂=CH₂-C(O)-O-(CH₂)₂-CF₂-CH₂-CF₂-CH₂-C₄F₉ → (CH₃CH₂-O-)₃Si-(CH₂)₃-N[-[CH₂)₂-C(O)-O-(CH₂)₂-CF₂-CH₂-CF₂-CH₂-C₄F₉]₂

A solution of one equivalent of APTES (Aminopropyl triethoxysilane, CAS# 919-30-2) and two equivalents acrylic acid 3,3,5,5,7,7,8,8,9,9,10,10,10-tridecafluoro-decyl ester (synthesized according to US3916009, CIBA-GEIGY AG, 1975) in absolute ethanol were allowed to stir at 60 °C for 5h. The solvent was distilled of under reduced pressure to provide the desired twin-tail silane (tertiary amine fluorosilane) quantitatively as a colorless oil.
1 H NMR (MeOH-d4): 0.58 (m, 2H, CH₂Si), 1.20 (t, 9H, CH₃), 1.54 (m, 2H, C*H*₂CH₂Si), 2.38 and 2.47 (2xm, 10H, CF₂CH₂CH₂ and OOCCH2 and NC*H*₂C₂H₄), 2.77 (m, br, 4H, CH₂N), 2.85 (m, 4H, C₄F₉CH₂), 3.04 (m, 4H, CF₂CH₂CF₂), 3.60 (s, 9H, OCH₂), 4.30 (m, 4H, CH₂OOC).
¹³C NMR (MeOH-d4): 8.6 (s, CH₂Si), 14.6 (s, C*H*₂CH₂Si), 18.7 (s, CH₃), 21.4 (m, CF₂*C*H₂CH₂), 33.4 (m, *C*H₂COO), 37.7 (m, CH₂CF₂CH₂), 44.3 (m, C₄F₉CH₂CF₂), 50.3 (m, CH₂N), 56.5 (m, CF₂CH₂CF₂), 57.5 (s, N*C*H₂ CH₂COO), 59.1 (m, CF₂CH₂CF₂), 59.5 (s, OCH₂), 61.5 (s, CH₂OOC), 115.5, 117.5, 119.9, 124.1 (4xm, C₂F₉), 173.9 (s, COO).

### Example 21 - tertiary amine fluorosilane (from PPVE acrylate; Michael addition)

A bis-fluoroalkyl (twin-tail) silane with ester and tertiary amine tether moieties was synthesized according to:

(CH₃CH₂-O-)₃Si-(CH₂)₃-NH₂ + 2 CH₂=CH₂-C(O)-O-(CH₂)₂-C₂F₄-O-C₃F₇ → (CH₃CH₂-O-)₃Si-(CH₂)₃-N[-(CH₂)₂-C(O)-O-(CH₂)₂-C₂F₄-O-C₃F₇]₂

Acrylic acid was esterified with 2-[2-(heptafluoropropoxy)-tetrafluoroethyl]-ethyl alcohol (US 2008113199 A1) in the presence catalytic amounts of *p*-toluene sulfonic acid to yield acrylic acid 3,3,4,4-tetrafluoro-4-heptafluoropropyloxy-butyl ester quantitatively. The ester was washed with water and distilled prior to the reaction with APTES (Aminopropyl triethoxysilane, CAS# 919-30-2). A solution of one equivalent of APTES and two equivalents acrylic acid 3,3,4,4-tetrafluoro-4-heptafluoropropyloxy-butyl in absolute ethanol were allowed to stir at 60 °C for 5h. The solvent was distilled of under reduced pressure to provide the desired twin-tail silane (tertiary amine fluorosilane) quantitatively as a colorless oil.
¹H NMR (CDCl₃): 0.58 (m, 2H, CH₂Si), 1.21 (t, 9H, CH₃), 1.54 (m, 2H, C*H*₂CH₂Si), 2.46 and 2.52 (2xm, 10H, CF₂CH₂ and NC*H*₂C₂H₄ and OOCCH2), 2.76 (m, 4H, CH₂N), 3.62 (m, 6H, OCH₂), 4.36 (m, 1 H, CH₂OOC).
¹³C NMR (MeOH-d4): 8.6 (s, CH₂Si), 14.5 (s, C*H*₂CH₂Si), 18.7 (s, CH₃), 21.5 (m, CF₂*C*H₂CH₂), 31.4 (t, CF₂CH₂), 50.3 (m, CH₂N), 59.1 (s, NCH₂), 57.4 (OOCCH₂C*H*₂N), 59.4 (s, CH2O), 61.5 (s, CH₂OOC), 115.5, 117.5, 119.9, (3xm, CF), 173.6 (s, COO).

### Example 22 - synthesis tertiary amine from C4-oxirane

A mixture one equivalent of APTES and two equivalents 2-(2,2,3,3,4,4,5,5,6,6,7,7,7-tridecafluoro-heptyl)-oxirane (Církva, V. et al. J Fluorine Chem. 1997, 83, 151-158), dissolved in THF, was allowed to stir at 50 °C for 5h to provide the desired twin-tail silane quantitatively as a amber oil upon removal of the solvent under reduced pressure.
¹H NMR (THF-d8): 0.69 (m, 2H, CH₂Si), 1.29 (m, CH₃), 1.56 (m, 2H, C*H*₂CH₂Si), 2.31 (2 x m, 4H, CF₂CH₂), 2.50 - 2.80 (m, 6H, CH₂N), 3.81 (m, 6H, OCH₂), 4.08, 4,15 (2 x s, br, 2H, CHOH).
¹³C NMR (CDCl₃): 8.0 (s, CH₂Si), 18.6 (s, CH₂*C*H₃), 23.7 (s, *C*H₂CH₂Si), 36.4 (m, CF₂CH₂), 52.3 (s, NCH₂), 55.1 (s, CH₂N), 58.7 (s, OCH₂), 63.3 (m, HOCHCH₂N), 108, 110, 116, 118 (m, CF₂ and CF₃).

## Claims

1. A fluorosilane represented by
(L)₃-Si-(CH₂)ₙ-(Z¹)ₐ-[C(X¹)]ₓ-(Z²)ₗ-Q¹-R_{f} Formula 1
wherein:
each n is independently an integer from 1 to 12;
a, x, and I are integers chosen such that the moiety of Formula 1 represented by -(Z¹)ₐ-[C(X¹)]ₓ-(Z²)ₗ- further represents at least one of the following moieties:
i) a first moiety wherein a=1, x=1, and l=1; and
ii) a second moiety wherein a=1, x=0; and l=0;
L is independently chosen from a hydrolysable or non-hydrolysable monovalent group
R_{f} is chosen from a C₂-C₁₂ perfluoroalkyl provided that: i) one fluorine atom of the perfluoroalkyl can be optionally replaced by hydrogen, and/or ii) the perfluoroalkyl can be optionally interrupted by at least one oxygen, methylene, or ethylene;
Q¹ is chosen from the group consisting of a C₂-C₁₂ hydrocarbylene optionally interrupted by at least one divalent organic group;
X¹ is chosen from O or S;
the first moiety further defined wherein Z¹ and Z² are chosen such that:
a) Z¹ is -NH- and Z² is from the group consisting of -NH-, -NH-S(O)₂-, -N[C(O)H]-, -[HC(COOH)(R¹)]CH-S-, and -(R¹)CH-[HC(COOH)]-S-;
b) alternatively, Z² is -NH- and Z¹ is -S-;
c) each R¹ is independently chosen from hydrogen, phenyl, or a monovalent C₁-C₈ alkyl optionally terminated by -C₆H₅, preferably H or CH₃;
the second moiety further defined wherein:
a) Z¹ is-N(-Q3-R_{f}); and
b) Q¹ and Q³ are independently chosen from the group consisting of a C₂-C₁₂ hydrocarbylene interrupted by at least one of -C(O)-O- or -O-C(O)-, and optionally further interrupted by at least one divalent organic group.

2. The fluorosilane of claim 1 being an isocyanate derived fluorosilane wherein:
a=1, x=1, and l=1;
Z¹ is -NH- and Z² is from the group consisting of -NH-, -NH-S(O)₂-, and -N[C(O)H]-;
alternatively, Z² is -NH- and Z¹ is -S-;
said isocyanate derived fluorosilane represented by the formula:
(L)₃-Si-(CH₂)ₙ-Z¹-C(X¹)-Z²-Q¹-R_{f}.

3. The isocyanate derived fluorosilane of claim 2 being a urea or thiourea fluorosilane wherein:
Z¹ and Z² are both -NH-;
said urea or thiourea represented by the formula:
(L)₃Si-(CH₂)ₙ-NH-C(X¹)-NH-Q¹-R_{f}
wherein:
X¹ is O to form a urea, or X¹ is S to form a thiourea; and
Q¹ is independently chosen from the group consisting of a C₂-C₁₂ hydrocarbylene optionally interrupted by at least one divalent moiety chosen from the group consisting of -S-, -S(O)-, -S(O)₂- and -O-C(O)-NH-.

4. The urea or thiourea fluorosilane of claim 3 wherein R_{f} is chosen from a C₂-C₁₂ perfluoroalkyl and Q¹ is independently chosen from the group consisting of a C₂-C₁₂ hydrocarbylene interrupted by at least one divalent moiety chosen from the group consisting of -S-, -S(O)-, -S(O)₂-, and -O-C(O)-NH-.

5. The urea or thiourea fluorosilane of claim 3 wherein R_{f} is chosen from a C₂-C₁₂ perfluoroalkyl provided that: i) one fluorine atom of the perfluoroalkyl is replaced by hydrogen, and/or ii) the perfluoroalkyl is interrupted by at least one oxygen, methylene, or ethylene

6. The isocyanate derived fluorosilane of claim 2 being a thiolcarbamate fluorosilane wherein:
Z¹ is -S- and Z² is-NH-; and
X¹ is O;
said thiolcarbamate fluorosilane represented by the formulae:
(L)₃Si-(CH₂)ₙ-NH-C(O)-S-Q¹-R_{f}
or
(L)₃Si-(CH₂)ₙ-S-C(O)-NH-Q¹-R_{f}
wherein:
Q¹ is independently chosen from the group consisting of a C₂-C₁₂ hydrocarbylene optionally interrupted by at least one divalent moiety chosen from the group consisting of -S-, -S(O)-, -S(O)₂-, -N(R)-C(O)-,
- C(O)-N(R¹)-, -(R¹)N-S(O)₂-, and

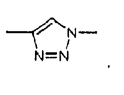

7. The thiolcarbamate fluorosilane of claim 6 wherein R_{f} is chosen from a C₂-C₁₂ perfluoroalkyl and Q¹ is independently chosen from the group consisting of a C₂-C₁₂ hydrocarbylene interrupted by at least one divalent moiety chosen from the group consisting of -S-, -S(O)-, -S(O)₂-, and -O-C(O)-NH-.

8. The thiolcarbamate fluorosilane of claim 6 wherein R_{f} is chosen from a C₂-C₁₂ perfluoroalkyl provided that: i) one fluorine atom of the perfluoroalkyl is replaced by hydrogen, and/or ii) the perfluoroalkyl is interrupted by at least one oxygen, methylene, or ethylene.

9. The isocyanate derived fluorosilane of claim 2 being a N-sulfone urea fluorosilane wherein:
Z¹ is -NH-, and Z² is -NH-S(O)₂-; and
X¹ is O;
said N-sulfone urea represented by the formula:
(L)₃Si-(CH₂)ₙ-NH-C(O)-NH-S(O)₂-Q¹-R_{f}
wherein:
Q¹ is independently chosen from the group consisting of an uninterrupted C₂-C₁₂ hydrocarbylene.

10. The fluorosilane of claim 1 being a formyl urea fluorosilane wherein:
a=1, x=1, and l=1; and
Z¹ is -NH-, and Z² is -N[C(O)H]-;
said formyl urea represented by the formula:
(L)₃Si-(CH₂)ₙ-NH-C(X¹)-N[C(O)H]-Q¹-R_{f}
wherein:
Q¹ is independently chosen from the group consisting of a C₂-C₁₂ hydrocarbylene interrupted by at least one divalent moiety chosen from the group consisting of -S- and -NH-.

11. The fluorosilane of claim 1 being a thioether succinamic acid fluorosilane wherein:
a=1, x=1, and l=1;
Z¹ is -NH- and Z² is -[HC(COOH)(R)]CH-S- or
-(R)CH-[HC(COOH)]-S-;
X¹ is O; and Q¹ is -(CH₂)₂-
said thioether succinamic acid represented by the formulae:
(L)₃Si-(CH₂)ₙ-NH-C(O)-[HC(COOH)(R¹)]CR¹-(CH₂)ₘ-S-(CH₂)₂-R_{f},
or
(L)₃Si-(CH₂)ₙ-NH-C(O)-(R¹)CH-[CR¹(COOH)]-(CH₂)ₘ-S-(CH₂)₂-R_{f}
wherein m 1 or 0; wherein each R¹ is independently chosen from methyl or hydrogen preferably H.

12. The fluorosilane of claim 1 being a tertiary amine fluorosilane wherein:
a=1, x=0; and l=0; and
Z¹ is -N[-Q³-(R_{f})]-_{;}
said tertiary amine represented by the formula: 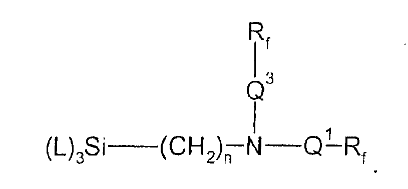
Q¹ and Q³ is independently chosen from the group consisting of a C₂-C₁₂ hydrocarbylene interrupted by at least one -C(O)-O- and optionally further interrupted by at least one divalent moiety chosen from the group consisting of -S-, -S(O)-, -S(O)₂-, -N(R¹)-C(O)-, -C(O)-N(R¹)-, - (R¹)N-S(O)₂-, and

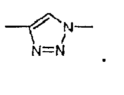

## Patentansprüche

1. Fluorsilan, dargestellt durch
(L)₃-Si-(CH₂)ₙ-(Z¹)ₐ-[C(X¹)]ₓ-(Z²)₁-Q¹-R_{f} Formel 1
wobei:
jedes n unabhängig eine ganze Zahl von 1 bis 12 ist;
a, x und 1 ganze Zahlen sind, die dergestalt ausgewählt sind, dass der Teil von Formel 1, dargestellt durch -(Z¹)ₐ-[C(X¹)]ₓ-(Z²)₁- ferner mindestens einen der folgenden Teile darstellt:
i) einen ersten Teil, wobei a=1, x=1 und 1=1 ist; und
ii) einen zweiten Teil, wobei a=1, x=0 und 1=0 ist;
L unabhängig ausgewählt ist aus einer hydrolysierbaren oder nicht hydrolysierbaren monovalenten Gruppe;
R_{f} ausgewählt ist aus einem C₂-C₁₂-Perfluoralkyl mit der Maßgabe, dass: i) ein Fluoratom des Perfluoralkyls gegebenenfalls durch Wasserstoff ersetzt werden kann, und/oder ii) das Perfluoralkyl gegebenenfalls durch mindestens einen Sauerstoff, ein Methylen oder ein Ethylen unterbrochen sein kann;
Q¹ aus der Gruppe ausgewählt ist, bestehend aus einem C₂-C₁₂-Hydrocarbylen, das gegebenenfalls durch mindestens eine divalente organische Gruppe unterbrochen sein kann;
X¹ aus O oder S ausgewählt ist;
der erste Teil ferner definiert ist, wobei Z¹ und Z² dergestalt ausgewählt sind, dass:
a) Z¹ -NH- ist und Z² aus der Gruppe ist, die aus -NH-, -NH-S(O)₂--N[C(O)H]-, -[HC(COOH)(R¹)]CH-S- und -(R¹)CH-[HC(COOH)]-S- besteht;
b) als Alternative Z² -NH- ist und Z¹ -S- ist;
c) jedes R¹ unabhängig ausgewählt ist aus Wasserstoff, Phenyl oder einem monovalenten C₁-C₈-Alkyl, das gegebenenfalls durch -C₆H₅, bevorzugt H oder CH₃ terminiert ist;
der zweite Teil ferner definiert ist, wobei:
a) Z¹ -N(-Q³ R_{f}) ist; und
b) Q¹ und Q³ unabhängig ausgewählt sind aus der Gruppe, die aus einem C₂-C₁₂-Hydrocarbylen besteht, das durch mindestens eines von -C(O)-O- oder -O-C(O)-unterbrochen ist, und gegebenenfalls ferner durch mindestens eine divalente organische Gruppe unterbrochen ist.

2. Fluorsilan nach Anspruch 1, das ein von Isocyanat abgeleitetes Fluorsilan ist, wobei:
a=1, x=1 und l=1 ist;
Z¹ -NH- ist und Z² aus der Gruppe ausgewählt ist, die aus -NH-, -NH-S(O)₂- und -N[C(O)H]- besteht;
als Alternative Z² -NH- ist und Z¹ -S- ist;
das von Isocyanat abgeleitete Fluorsilan dargestellt ist durch die Formel:
(L)₃-Si-(CH₂)ₙ-Z¹-C(X)-Z²-Q¹-R_{f}.

3. Von Isocyanat abgeleitetes Fluorsilan nach Anspruch 2, das ein Harnstoff- oder Thioharnstoff-Fluorsilan ist, wobei:
Z¹ und Z² beide -NH- sind;
der Harnstoff oder Thioharnstoff dargestellt ist durch die Formel:
(L)₃Si-(CH₂)ₙ-NH-C(X¹)-NH-Q¹-R_{f}
wobei:
X¹ O zur Bildung eines Harnstoffs ist, oder X¹ S zur Bildung eines Thioharnstoffs ist; und
Q¹ unabhängig ausgewählt ist aus der Gruppe, die aus einem C₂-C₁₂-Hydrocarbylen besteht, das gegebenenfalls durch mindestens einen divalenten Teil unterbrochen ist, ausgewählt aus der Gruppe, die aus -S-, -S(O)-, -S(O)₂- und -O-C(O)-NH- besteht.

4. Harnstoff- oder Thioharnstoff-Fluorsilan nach Anspruch 3, wobei R_{f} aus einem C₂-C₁₂-Perfluoralkyl ausgewählt ist und Q¹ unabhängig ausgewählt ist aus der Gruppe, die aus einem C₂-C₁₂-Hydrocarbylen besteht, das durch mindestes einen divalenten Teil unterbrochen ist, ausgewählt aus der Gruppe, die aus -S-, -S(O)-, -S(O)₂- und -O-C(O)-NH- besteht.

5. Harnstoff- oder Thioharnstoff-Fluorsilan nach Anspruch 3, wobei R_{f} aus einem C₂-C₁₂-Perfluoralkyl ausgewählt ist, mit der Maßgabe, dass: i) ein Fluoratom des Perfluoralkyls durch Wasserstoff ersetzt ist, und/oder ii) das Perfluoralkyl durch mindestens einen Sauerstoff, ein Methylen oder ein Ethylen unterbrochen ist.

6. Von Isocyanat abgeleitetes Fluorsilan nach Anspruch 2, das ein Thiolcarbamat-Fluorsilan ist, wobei:
Z¹ -S- ist and Z² -NH- ist; und
X¹ 0 ist;
das Thiolcarbamat-Fluorsilan dargestellt ist durch die Formeln:
(L)₃Si-(CH₂)ₙ-NH-C(O)-S-Q¹-R_{f}
oder
(L)₃Si-(CH₂)ₙ-S-C(O)-NH-Q¹-R_{f},
wobei:
Q¹ unabhängig ausgewählt ist aus der Gruppe, die aus einem C₂-C₁₂-Hydrocarbylen besteht, das gegebenenfalls durch mindestens einen divalenten Teil unterbrochen ist, ausgewählt aus der Gruppe, die aus -S-, -S(O)-, -S(O)₂- -N(R¹)-C(O)-, -C(O)-N(R¹)-, -(R¹)N-S(O)₂- und 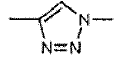 besteht.

7. Thiolcarbamat-Fluorsilan nach Anspruch 6, wobei R_{f} ausgewählt ist aus einem C₂-C₁₂-Perfluoralkyl und Q¹ unabhängig ausgewählt ist aus der Gruppe, die aus einem C₂-C₁₂-Hydrocarbylen besteht, das durch mindestens einen divalenten Teil unterbrochen ist, ausgewählt aus der Gruppe, die aus -S-, -S(O)-, -S(O)₂-, und -O-C(O)-NH- besteht.

8. Thiolcarbamat-Fluorsilan nach Anspruch 6 wobei R_{f} ausgewählt ist aus einem C₂-C₁₂-Perfluoralkyl, mit der Maßgabe, dass: i) ein Fluoratom des Perfluoralkyls durch Wasserstoff ersetzt ist, und/oder ii) das Perfluoralkyl durch mindestens einen Sauerstoff, ein Methylen oder ein Ethylen unterbrochen ist.

9. Von Isocyanat abgeleitetes Fluorsilan nach Anspruch 2, das ein N-Sulfonharnstoff-Fluorsilan ist, wobei:
Z¹ -NH- ist und Z² -NH-S(O)₂- ist; und
X¹ 0 ist;
der N-Sulfonharnstoff dargestellt ist durch die Formel:
(L)₃Si-(CH₂)ₙ-NH-C(O)-NH-S(O)₂-Q¹-R_{f}
wobei:
Q¹ unabhängig ausgewählt ist aus der Gruppe, die aus einem nicht unterbrochenen C₂-C₁₂-Hydrocarbylen besteht.

10. Fluorsilan nach Anspruch 1, das ein Formylharnstoff-Fluorsilan ist, wobei:
a=1, x=1 und l=1 ist; und
Z¹ -NH- ist und Z² -N[C(O)H]- ist;
der Formylharnstoff dargestellt ist durch die Formel:
(L)₃Si-(CH₂)ₙ-NH-C(X)-N[C(O)H]-Q¹-R_{f}
wobei:
Q¹ unabhängig ausgewählt ist aus der Gruppe, die aus einem C₂-C₁₂-Hydrocarbylen besteht, das durch mindestens einen divalenten Teil unterbrochen ist, ausgewählt aus der Gruppe, die aus -S- und -NH- besteht.

11. Fluorsilan nach Anspruch 1, das ein Thioether-Succinamidsäure-Fluorsilan ist, wobei:
a=1, x=1 und l=1 ist;
Z¹ -NH- ist und Z² -[HC(COOH)(R¹)]CH-S- oder
-(R¹)CH-[HC(COOH)]-S- ist;
X¹ O ist; und Q¹ -(CH₂)₂- ist;
die Thioether-Succinamidsäure dargestellt ist durch die Formeln:
(L)₃Si-(CH₂)ₙ-NH-C(O)-[HC(COOH)(R¹)]CR¹-(CH₂)ₘ-S-(CH₂)₂-R_{f},
oder
(L)₃Si-(CH₂)ₙ-NH-C(O)-(R¹)CH-[CR¹(COOH)]-(CH₂)ₘ-S-(CH₂)₂-R_{f}
wobei m 1 oder 0 ist; wobei jedes R¹ unabhängig ausgewählt ist aus Methyl oder Wasserstoff, bevorzugt H.

12. Fluorsilan nach Anspruch 1, das ein tertiäres Amin-Fluorsilan ist, wobei:
a=1, x=0 und 1=0 ist; und
Z¹ -N[-Q³-(R_{f})]- ist;
das tertiäre Amin dargestellt ist durch die Formel: 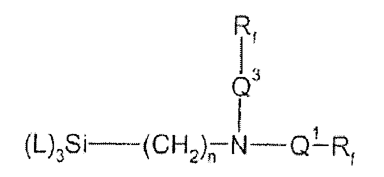
Q¹ und Q³ unabhängig ausgewählt sind aus der Gruppe, die aus einem C₂-C₁₂-Hydrocarbylen besteht, das durch mindestens ein -C(O)-O- unterbrochen ist und gegebenenfalls ferner durch mindestens einen divalenten Teil unterbrochen ist, ausgewählt aus der Gruppe, die aus -S- -S(O)-, -S(O)₂-, -N(R¹)-C(O)-, -C(O)-N(R¹)-, -(R¹)N-S(O)₂- und 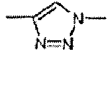 besteht.

## Revendications

1. Fluorosilane représenté par:
(L)₃-Si-(CH₂)ₙ-(Z¹)ₐ-(C(X¹)]ₓ-(Z²)₁-Q¹-R_{f} Formule 1
dans lequel:
chaque n est indépendamment un nombre entier de 1 à 12;
a, x et 1 sont des nombres entiers choisis de sorte que la fraction de la Formule 1 représentée par -(Z¹)ₐ-[C(X¹)]ₓ-(Z²)₁- représente en outre au moins une des fractions qui suivent:
i) une première fraction, dans laquelle a = 1, x = 1 et l = 1; et
ii) une deuxième fraction, dans laquelle a = 1, x = 0 et l = 0;
L est indépendamment choisi parmi un groupe monovalent hydrolysable ou non hydrolysable;
R_{f} est choisi parmi un perfluoroalkyle C₂-C₁₂ à condition que: i) un atome de fluor du perfluoroalkyle puisse être optionnellement remplacé par un hydrogène et/ou ii) le perfluoroalkyle puisse être optionnellement interrompu par au moins un oxygène, un méthylène ou un éthylène;
Q¹ est choisi dans le groupe constitué d'un hydrocarbylène C₂-C₁₂ optionnellement interrompu par au moins un groupe organique divalent;
X¹ est choisi parmi O ou S;
la première fraction étant définie en outre, dans laquelle Z¹ et Z² sont choisis de sorte que:
a) Z¹ est -NH- et Z² est issu du groupe constitué de -NH-, -NH-S(O)₂-, - N[C(O)H]-, -[HC(COOH)(R¹)]CH-S- et -(R¹)CH-[HC(COOH)]-S-;
b) selon une variante, Z² est -NH- et Z¹ est -S-;
c) chaque R¹ est indépendamment choisi parmi un hydrogène, un phényle ou un alkyle C₁-C₈ monovalent optionnellement terminé par -C₆H₅, de préférence H ou CH₃;
la deuxième fraction étant définie en outre, dans laquelle:
a) Z¹ est -N(-Q³-R_{f}); et
b) Q¹ et Q³ sont indépendamment choisis dans le groupe constitué d'un hydrocarbylène C₂-C₁₂ interrompu par au moins un de -C(O)-O- ou -O-C(O)- et optionnellement en outre interrompu par au moins un groupe organique divalent.

2. Fluorosilane selon la revendication 1 qui est un fluorosilane dérivé d'un isocyanate dans lequel:
a = 1, x = 1 et l = 1;
Z¹ est -NH- et Z² est issu du groupe constitué de -NH-, -NH-S(O)₂- etN[C(O)H]-;
selon une variante, Z² est -NH- et Z¹ est -S-;
ledit fluorosilane dérivé d'un isocyanate étant représenté par la formule:
(L)₃-Si-(CH₂)ₙ-Z¹-C(X¹)-Z²-Q¹-R_{f}.

3. Fluorosilane dérivé d'un isocyanate selon la revendication 2 qui est un fluorosilane d'urée ou de thiourée dans lequel:
Z¹ et Z² sont tous les deux -NH-;
ladite urée ou thiourée étant représentée par la formule:
(L)₃Si-(CH₂)ₙ-NH-C(X)-NH-Q¹-R_{f}
dans lequel:
X¹ est O pour former une urée ou X¹ est S pour former une thiourée; et
Q¹ est indépendamment choisi dans le groupe constitué d'un hydrocarbylène C₂-C₁₂ optionnellement interrompu par au moins une fraction divalente choisie dans le groupe constitué de -S-, -S(O)-, -S(O)₂- et -O-C(O)-NH-.

4. Fluorosilane d'urée ou de thiourée selon la revendication 3, dans lequel R_{f} est choisi parmi un perfluoroalkyle C₂-C₁₂ et Q¹ est indépendamment choisi dans le groupe constitué d'un hydrocarbylène C₂-C₁₂ interrompu par au moins une fraction divalente choisie dans le groupe constitué de -S-, -S(O)-, -S(O)₂- et -O-C(O)-NH-.

5. Fluorosilane d'urée ou de thiourée selon la revendication 3, dans lequel R_{f} est choisi parmi un perfluoroalkyle C₂-C₁₂ à condition que: i) un atome de fluor du perfluoroalkyle soit remplacé par un hydrogène et/ou ii) le perfluoroalkyle soit interrompu par au moins un oxygène, un méthylène ou un éthylène.

6. Fluorosilane dérivé d'un isocyanate selon la revendication 2 qui est un fluorosilane de thiolcarbamate dans lequel:
Z¹ est -S- et Z² est -NH-; et
X¹ est O;
ledit fluorosilane de thiolcarbamate étant représenté par les formules:
(L)₃Si-(CH₂)ₙ-NH-C(O)-S-Q¹-R_{f}
ou
(L)₃Si-(CH₂)ₙ-S-C(O)-NH-Q¹-R_{f}
dans lequel:
Q¹ est indépendamment choisi dans le groupe constitué d'un hydrocarbylène C₂-C₁₂ optionnellement interrompu par au moins une fraction divalente choisie dans le groupe constitué de -S-, -S(O)-, -S(O)₂-, -N(R¹)-C(O)-, -C(O)-N(R¹)-, -(R¹)N-S(O)₂ et

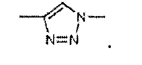

7. Fluorosilane de thiolcarbamate selon la revendication 6, dans lequel R_{f} est choisi parmi un perfluoroalkyle C₂-C₁₂ et Q¹ est indépendamment choisi dans le groupe constitué d'un hydrocarbylène C₂-C₁₂ interrompu par au moins une fraction divalente choisie dans le groupe constitué de -S-, -S(O)-, -S(O)₂- et -O-C(O)-NH-.

8. Fluorosilane de thiocarbamate selon la revendication 6, dans lequel R_{f} est choisi parmi un perfluoroalkyle C₂-C₁₂ à condition que: i) un atome de fluor du perfluoroalkyle soit remplacé par un hydrogène et/ou ii) le perfluoroalkyle soit interrompu par au moins un oxygène, un méthylène ou un éthylène.

9. Fluorosilane dérivé d'un isocyanate selon la revendication 2 qui est un fluorosilane de N-sulfone urée dans lequel:
Z¹ est -NH- et Z² est -NH-S(O)₂-; et
X¹ est O;
ladite N-sulfone urée étant représentée par la formule:
(L)₃Si-(CH₂)ₙ-NH-C(O)-NH-S(O)₂-Q¹-R_{f}
dans lequel:
Q¹ est indépendamment choisi dans le groupe constitué d'un hydrocarbylène C₂-C₁₂ non interrompu.

10. Fluorosilane selon la revendication 1 qui est un fluorosilane de formylurée, dans lequel:
a = 1, x = 1 et l = 1; et
Z¹ est -NH- et Z² est -N[C(O)H]-;
ladite formylurée étant représentée par la formule:
(L)₃Si-(CH₂)ₙ-NH-C(X)-N[C(O)H]-Q¹-R_{f}
dans lequel:
Q¹ est indépendamment choisi dans le groupe constitué d'un hydrocarbylène C₂-C₁₂ interrompu par au moins une fraction divalente choisie dans le groupe constitué de -Set -NH-.

11. Fluorosilane selon la revendication 1 qui est un fluorosilane de thioéther d'acide succinamique, dans lequel:
a = 1, x = 1 et l = 1;
Z¹ est -NH- et Z² est -[HC(COOH)(R¹)]CH-S- ou
-(R¹)CH-[HC(COOH)]-S-;
X¹ est O; et Q¹ est -(CH₂)₂-;
ledit thioéther d'acide succinamique étant représenté par les formules:
(L)₃Si-(CH₂)ₙ-NH-C(O)-[HC(COOH)(R¹)]CR¹-(CH₂)ₘ-S-(CH₂)₂-R_{f}
ou
(L)₃Si-(CH₂)ₙ-NH-C(O)-(R¹)CH-[CR¹(COOH)]-(CH₂)ₘ-S-(CH₂)₂-R_{f}
dans lequel m est 1 ou 0; dans lequel chaque R¹ est indépendamment choisi parmi un méthyle ou un hydrogène, de préférence H.

12. Fluorosilane selon la revendication 1 qui est un fluorosilane d'amine tertiaire, dans lequel:
a = 1, x = 0 et 1 = 0; et
Z¹ est -N[-Q³-(R_{f})]-;
ladite amine tertiaire étant représentée par la formule: 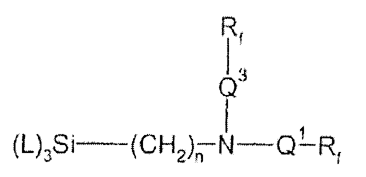
Q¹ et Q³ sont indépendamment choisis dans le groupe constitué d'un hydrocarbylène C₂-C₁₂ interrompu par au moins un -C(O)-O- et optionnellement en outre interrompu par au moins une fraction divalente choisie dans le groupe constitué de -S-,S(O)-, -S(O)₂-, -N(R¹)-C(O)-, -C(O)-N(R¹)-, -(R¹)N-S(O)₂ et
